# EUROPEAN PATENT SPECIFICATION

(11) **EP 4 440 914 B1**
(45) Date of publication and mention of the grant of the patent: **17.09.2025**
(21) Application number: 21836233.3
(22) Date of filing: 09.12.2021
(51) Int. Cl.: B62K 3/00, B60F 5/00, B62K 5/02, B60F 3/00, B62K 13/00, B62M 7/04

(54) **MULTIFUNCTION ELECTRIC SCOOTER WITH VARIABLE CONFIGURATION**
ELEKTRISCHER MULTIFUNKTIONSROLLER MIT VARIABLER KONFIGURATION
TROTTINETTE ÉLECTRIQUE MULTIFONCTION À CONFIGURATION VARIABLE

(30) Priority: 29.11.2021 IT 202100030098
(43) Date of publication of application: 09.10.2024
(73) Proprietor: V.Z. Group Sagl, 6900 Lugano (CH)
(72) Inventor: ZOGNO, Davide, 35020 Tribano (IT)
(74) Representative: Serravalle, Marco
(86) International application number: PCT/IB2021/061507
(87) International publication number: WO 2023/094869

(56) References cited:
- CN-A- 106 864 642
- CN-U- 201 784 420
- CN-U- 206 938 946
- CN-U- 212 828 869
- CN-Y- 2 157 068
- US-B1- 6 540 569

## Description

The present patent concerns motor driven vehicles and more specifically it concerns a new multifunction scooter with variable configuration. CN 106 864 642 A discloses the preamble of claim 1.

Scooters and motor driven scooters are known which generally comprise a frame, at least one front wheel and at least one rear wheel mounted on parallel axles, a deck/platform interposed between the wheels and configured to support at least one user standing thereon, handlebars connected to the front wheel and suited to be manoeuvred by the user for steering operations.

The handlebars can be folding, meaning hinged to the frame in such a way that they can be positioned substantially orthogonal to the platform when the scooter is used and substantially parallel and superimposed to the platform to reduce the overall dimensions of the scooter when the latter is not used.

In the case of motor driven scooters, a motor is provided, which is usually electric, powered by rechargeable batteries and connected to the rear wheel. The motor and the batteries are mounted so that they are integral with the frame, for example under the platform. In the case of motor driven scooters, the handlebars are also provided with an accelerator knob and a brake lever which are connected to the motor.

The use of scooters, and in particular of motor driven scooters, is increasingly widespread, especially in urban environments and city centres, where motor vehicle traffic is often heavy and leads an increasing number of users to opt for motorcycles, bicycles and scooters.

Scooters, in particular, are very comfortable as, in addition to being easier to handle and lighter than a bicycle, have smaller overall dimensions and can be folded and placed in small spaces, as well as easily loaded on a car or a public means of transport. In addition to the above, thanks to the electric power supply, they do not emit polluting gases, are very silent and are therefore particularly appreciated when it comes to moving around holiday villages, historical city centres, parks etc.

Aqua scooters or sea scooters are also known, which are devices used for diving activities, both to dive deep into the sea and to move on the sea surface, for example for snorkelling activities.

An aqua scooter usually comprises a frame containing an electric motor or an engine, connected to one or more propellers. The propeller is contained in a containment body configured as a grid box, in order to protect it against any accidental contact.

The frame is also provided with grips on which the controls connected to the motor/engine are located.

The subject of the present invention is a new multifunction scooter with variable configuration, having the functions of a normal electric scooter combined with the functions of an aqua scooter.

It is the main object of the present invention to provide a scooter that can be selectively used as a motor driven scooter, that is, to circulate on roads, or as an aqua scooter, that is, to move in the water.

An important object of the present invention is to provide a scooter that can be switched from one operating mode to the other simply and quickly, with no need for complex assembly/disassembly operations.

The new multifunction scooter is made up of the following main components:
- a frame;
- at least one front wheel and at least one rear wheel rotating on parallel axles; according to a preferred solution, the new scooter comprises two rear wheels mounted on the same axle to improve its stability on the road;
- a platform suited to support a user standing thereon, said platform being mounted between said front wheel and said rear wheel;
- handlebars comprising a vertical bar connected to said front wheel in such a way that the rotation of the vertical bar steers said front wheel;
- at least one motor, preferably electric;
- at least one containment body suited to contain said motor;
- at least one battery suited to supply power to said electric motor, preferably mounted in said containment body containing said motor;
- transmission means suited to transmit motion from said motor to said at least one rear wheel;
- at least one propeller mounted in a containment body;
- transmission means suited to transmit motion from said motor to said at least one propeller,
and wherein the new scooter comprises selective coupling means suited to selectively couple said at least one motor with said at least one rear wheel or with said at least one propeller.

Said propeller is conveniently mounted in an intermediate position between the motor and the rear wheel/wheels.

The new multifunction scooter has a variable configuration and, in particular, the handlebars are hinged to the frame and can assume at least one first configuration, in which the vertical bar is substantially orthogonal to the platform in such a way that they can be used as normal handlebars of a scooter by a user standing on the platform, and a second configuration, in which the bar is substantially parallel to said platform and the handlebars can thus be held by a user when the scooter is used as an aqua scooter.

Said selective coupling means are configured in such a way that when said handlebars are in said first configuration said motor is mechanically connected to said at least one rear wheel and the scooter can be used for road circulation, while when said handlebars are in said second configuration said motor is mechanically connected to said at least one propeller, making the scooter suited to be used as an aqua scooter. Said selective coupling means comprise, more specifically, a coupling unit connected to the drive shaft of said at least one motor, and wherein said coupling unit can assume two positions according to said two configurations of the handlebars.

When said handlebars are in the first configuration, said coupling unit is translated towards said at least one rear wheel, to which it is connected.

When said handlebars are brought to said second configuration, said coupling unit is translated towards said propeller, to which it is connected.

Said selective coupling means, for example, can be operated and controlled mechanically but alternatively they can be operated electromechanically or electromagnetically, or through other means.

The user of the new scooter can therefore use the new scooter selectively, on the road as a normal scooter or in the water as a normal aqua scooter. To select one of the two operating modes, it is sufficient to vary the configuration of the handlebars, automatically obtaining the selective connection of the motor to the rear wheel/wheels or to the propeller of the motor.

The characteristics of the new multifunction scooter are highlighted in greater detail in the following description, making reference to the drawings which are attached hereto by way of non-limiting example.

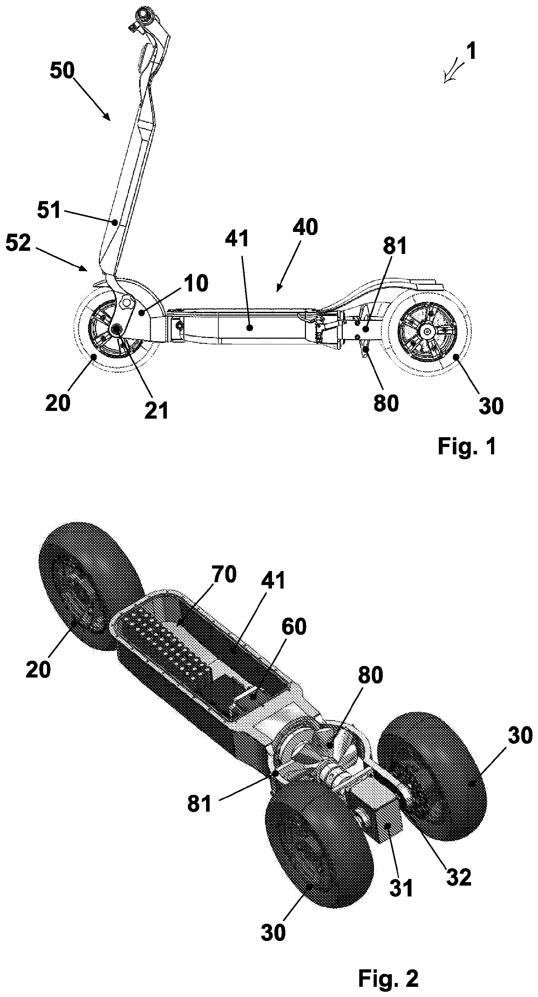

Figure 1 shows a partial side view of the new scooter (1), where the handlebars (50) are only partially visible.
Figure 2 shows a partial sectional view of the new scooter (1), showing the inside of the containment body (41) containing a motor (60) and the corresponding batteries (70).

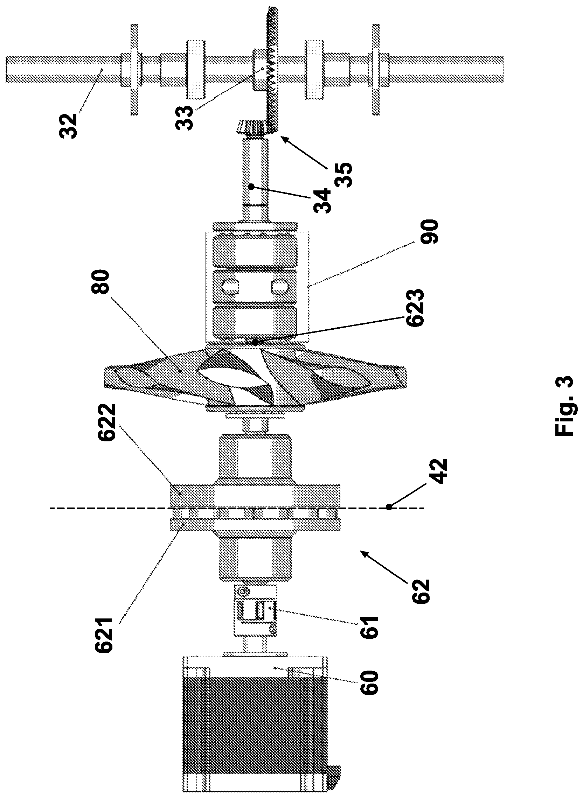

Figure 3 shows a diagram illustrating some of the fundamental parts making up the selective transmission system which transmits motion from said motor (60) to a propeller (80) or the axle (32) of the rear wheels (30) of the scooter (1).

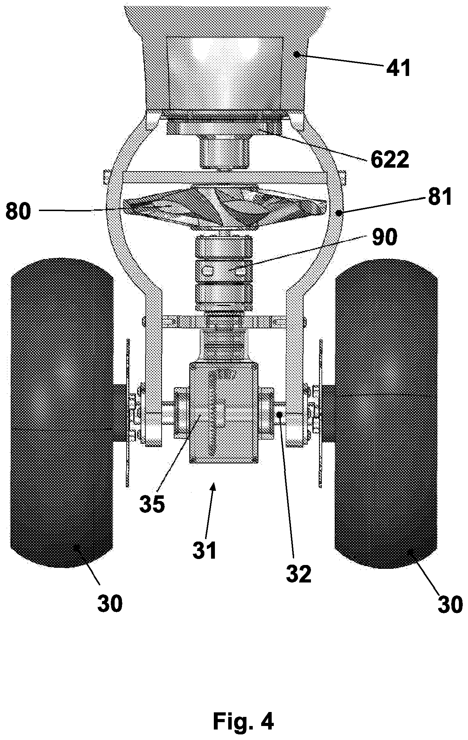

Figure 4 shows a schematic view of the rear part of the scooter (1) only.
Figures 5 and 6 show a schematic view, respectively, of the configuration in which a coupling unit (90) is connected only to the propeller (80) (Figure 5) and of the configuration in which said coupling unit (90) is connected to the drive shaft (34) of the rear wheels (Figure 6).
Figure 7 shows a three-dimensional view of the scooter (1) in the configuration of use as a normal scooter for road circulation, meaning with the bar of the handlebars (50) in a substantially vertical position, so that the coupling unit (90) is connected to the rear wheels (30).
Figure 8 shows a three-dimensional view of the scooter (1) in the configuration of use as an aqua scooter, meaning with the handlebars (50) folded and superimposed to the platform (40) in such a way that the coupling unit (90) is connected to the propeller (80).
Figure 9 shows a side view of the scooter (1) in the configuration illustrated in Figure 8.

The new multifunction scooter (1) comprises a frame (10) to which at least one front wheel (20) and at least one and more preferably two rear wheels (30) are constrained. Said two rear wheels (30) are mounted on the same axle (32), in turn parallel to the axle (21) of said front wheel (20).

A platform (40) suited to support a user standing thereon is mounted between said front wheel (20) and said rear wheels (30).

Said frame (10) has handlebars (50) constrained thereto, said handlebars (50) having a vertical bar (51) and connection means (52) for connection to said front wheel (20) in such a way that the rotation of the handlebars (50) causes said front wheel (20) to steer.

Said handlebars (50) can be folded, meaning that they are hinged to said frame (10) in such a way as to be able to switch between a first configuration, in which said handlebars (50) are in an orthogonal or transversal position with respect to said axles (21, 32) of said wheels and to said platform (40), and a second configuration, in which said handlebars (50) are substantially parallel or in any case close to said platform (40).

The new scooter (1) comprises an electric motor (60) conveniently housed inside a containment body (41) located, for example, under said platform (40). Said motor (60) is preferably of the brushless type.

The same containment body (41) houses also the battery pack (70) and other accessories which are necessary for the operation of the scooter (1).

Said containment body (41) containing the motor (60) is conveniently and preferably configured in such a way as to guarantee water tightness.

Said motor (60) is connected to the axle (32) of said rear wheels (30) through transmission means (61, 62, 90, 34, 31) described and claimed here below, so that the motor (60) can selectively transmit a rotary motion to said axle (32) of the rear wheels (30).

The scooter (1) furthermore comprises a propeller (80) conveniently mounted in a containment body (81), for example configured as a grid box or in any case provided with openings, and preferably positioned between said motor (60) and said rear wheels (30). Said propeller (80) is conveniently configured to work in water.

Said motor (60) is connected to said propeller (80) through transmission means (61, 62, 90) described and claimed here below, so that the motor (60) can selectively transmit a rotary motion to said propeller (80).

Said transmission means preferably comprise a flexible coupling (61) and a magnetic coupling (62) which allow the rotary motion to be transmitted from the inside to the outside of said containment body (41) and more precisely through a side (42) of said containment body (41).

More specifically, said magnetic coupling (62) comprises an internal magnetic half coupling (621) housed inside said containment body (41) and an external magnetic half coupling (622) housed outside said containment body (41).

A shaft (623) is integral with said external magnetic half coupling (622), said shaft (623) being inserted axially in said propeller (80) so that it passes through it and being mechanically connected to a coupling unit (90) which is positioned between said propeller (80) and said axle (32) of the rear wheels (30).

Said coupling unit (90) in turn comprises a first element (91) and a second element (92) engaged with said shaft (623) of the magnetic coupling (62) and thus rotating together with the shaft (623) itself.

Said coupling unit (90) comprises also a third non-rotary element (93) which is connected to said handlebars (50) in such a way that the displacement of said handlebars (50) between said first and said second configuration causes the linear displacement of said coupling unit (90) in a direction which is coaxial with said shaft (623) of the magnetic coupling (62), between a first position and a second position.

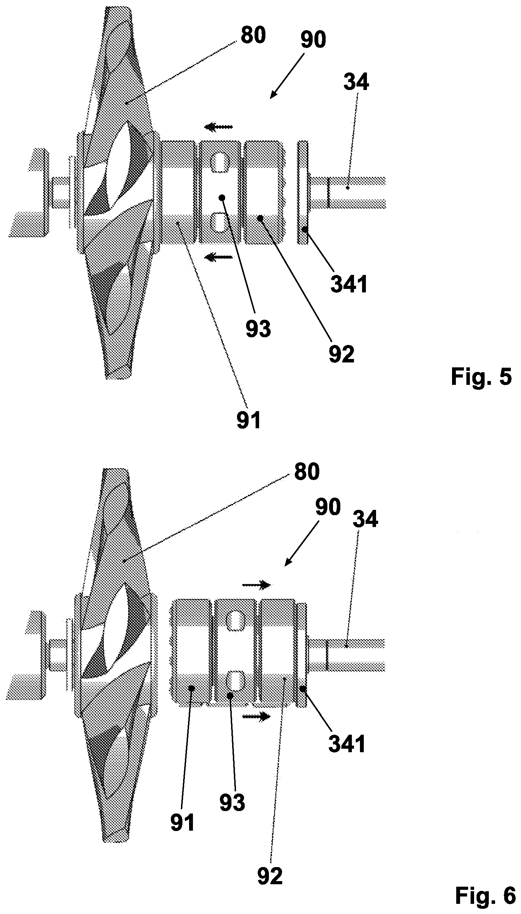

When said handlebars (50) are in said first configuration, said coupling unit (90) is in a first position, translated towards said rear wheels (30) as shown in Figure 6.

In this first position, said second element (92) of the coupling unit (90) is mechanically connected to connection means (341) suited to connect it to a drive shaft (34) of said rear wheels (30), which is thus set rotating by the motor (60).

Said rotary motion of the drive shaft (34) of the rear wheels (30) is transmitted to the axle (32) of the rear wheels (30) through suitable transmission means comprising, for example, a gearmotor (31) in turn comprising, for example, bevel gears (35).

In this position, said coupling unit (90) is not coupled with the propeller (80), which is thus idle or stationary.

Therefore, with the handlebars (50) in the first configuration, the new scooter can be used as a normal scooter for road circulation, as the motor (60) is connected to the rear wheels (30) and the handlebars (50) are in the correct position to manoeuvre the scooter (1).

When said handlebars (50), instead, are in said second configuration, said coupling unit (90) is in a second position, translated towards said propeller (80) as shown in Figure 5.

In this first position, said first element (91) is mechanically connected to said propeller (80), which is thus set rotating by the motor (60).

In this position, said coupling unit (90) is not coupled with the drive shaft (34) of the rear wheels (30), which are thus idle or stationary.

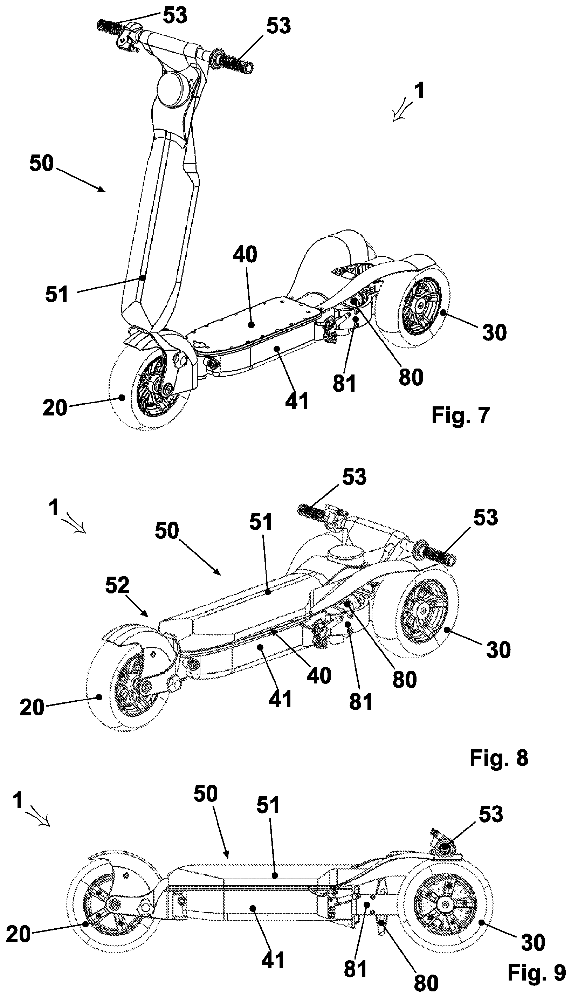

Therefore, with the handlebars (50) in the second configuration, the new scooter can be used as an aqua scooter, as the motor (60) is connected to the propeller (80), while said handlebars (50) are in the correct position to be held by a user who uses the scooter in the aqua scooter configuration. As shown in Figures 8 and 9, the grips (53) of the handlebars (50) are in fact, in this configuration, in a position close to the rear wheels (30) and thus easily accessible for the user.

Therefore, with reference to the above description and the attached drawings, the following claims are expressed.

## Claims

1. Multifunction scooter (1) comprising:
- a frame (10);
- at least one front wheel (20) and at least one rear wheel (30) rotating on axles (21, 32) which are parallel to each other and mounted on said frame (10);
- a deck/platform (40) suited to support a user standing thereon, said platform (40) being mounted on said frame (10) between said at least one front wheel (20) and said at least one rear wheel (30);
- handlebars (50) connected to said at least one front wheel (20);
- at least one electric motor (60) with corresponding power supply means mounted on said frame (10);
- at least one propeller (80) mounted on said frame (10);
- transmission means between said at least one motor (60) and said at least one propeller (80) ; **characterized in that** it also comprises:
- transmission means between said at least one motor (60) and said at least one rear wheel (30);
- coupling means suited to selectively couple said at least one motor (60) with said at least one rear wheel (30) or with said at least one propeller (80).

2. Multifunction scooter (1), **characterized in that** said propeller (80) is mounted in an intermediate position between said at least one motor (80) and said at least one rear wheel.

3. Multifunction scooter (1) according to claim 1 or 2, **characterized in that** said handlebars (50) are hinged to said frame (10) in such a way that they can be arranged in at least one first configuration, in which the vertical bar (51) of the handlebars (50) is substantially orthogonal or transversal to said axles (21, 31) of the wheels (20, 30) and/or to said platform (40), and in at least one second configuration, in which said bar (51) is substantially parallel or in any case close to said platform (40), and wherein said coupling means are configured in such a way that when said handlebars (50) are in said first configuration said motor (60) is mechanically connected to said at least one rear wheel (30), while when said handlebars (50) are in said second configuration said motor (60) is mechanically connected to said at least one propeller (80).

4. Multifunction scooter (1) according to claim 1 or 2, **characterized in that** said coupling means comprise a coupling unit (90) connected to the drive shaft (623) of said at least one motor (60), and wherein:
- when said handlebars (50) are in said first configuration, said coupling unit (90) is connected to the axle (32) of said at least one rear wheel (30);
- when said handlebars (50) are in said second configuration, said coupling unit (90) is connected to said at least one propeller (80).

5. Multifunction scooter (1) according to the preceding claims, **characterized in that** it comprises two of said rear wheels (30) rotating on the same axle (32).

6. Multifunction scooter (1) according to the preceding claims, **characterized in that** said motor (60) is of the brushless type.

7. Multifunction scooter (1) according to the preceding claims, **characterized in that** said motor (60) is housed inside a containment body (41) configured in such a way as to guarantee water tightness.

8. Multifunction scooter (1) according to the preceding claims, **characterized in that** said motor (60) is selectively connected to the axle (32) of said at least one rear wheel (30) through said transmission means (61, 62, 90, 34, 31) which comprise at least one magnetic coupling (62) in turn comprising an internal magnetic half coupling (621) housed inside said containment body (41) and an external magnetic half coupling (622) housed outside said containment body (41), and wherein a shaft (623) is integral with said external magnetic half coupling (622), said shaft (623) being inserted axially in said propeller (80) so that it passes through it and being mechanically connected to said coupling unit (90) which is positioned between said propeller (80) and said axle (32) of the at least one rear wheel (30).

9. Multifunction scooter (1) according to the preceding claims, **characterized in that** said coupling unit (90) in turn comprises a first element (91) and a second element (92) engaging with said shaft (623) of the magnetic coupling (62) and thus rotating together with the shaft (623) itself, and a third non-rotary element (93) connected to said handlebars (50) in such a way that the displacement of said handlebars (50) between said first and said second configuration causes the linear displacement of said coupling unit (90) in a direction which is coaxial with said shaft (623) of the magnetic coupling (62), between said first position and said second position, and wherein:
- in said first position, said second element (92) of the coupling unit (90) is mechanically connected, directly or indirectly, with said axle (32) of the at least one rear wheel (30);
- in said second position, said first element (91) of the coupling unit (90) is mechanically connected, directly or indirectly, with said propeller (80).

## Patentansprüche

1. Multifunktionaler Roller (1), umfassend:
einen Rahmen (10);
mindestens ein Vorderrad (20) und mindestens ein Hinterrad (30), die auf Achsen (21, 32) drehbar gelagert sind, welche parallel zueinander verlaufen und an dem genannten Rahmen (10) montiert sind;
ein Trittbrett/eine Plattform (40), geeignet, einen darauf stehenden Benutzer zu tragen, wobei die Plattform (40) zwischen dem genannten mindestens einen Vorderrad (20) und dem genannten mindestens einen Hinterrad (30) an dem genannten Rahmen (10) angeordnet ist;
einen Lenker (50), der mit dem genannten mindestens einen Vorderrad (20) verbunden ist;
mindestens einen Elektromotor (60) mit entsprechenden Energieversorgungsmitteln, die an dem genannten Rahmen (10) montiert sind;
mindestens eine Luftschraube (80), die an dem genannten Rahmen (10) montiert ist;
Übertragungsmittel zwischen dem genannten mindestens einen Motor (60) und der genannten mindestens einen Luftschraube (80);
**dadurch gekennzeichnet, dass** er außerdem umfasst:
- Übertragungsmittel zwischen dem genannten mindestens einen Motor (60) und dem genannten mindestens einen Hinterrad (30);
- Kupplungsmittel, die geeignet sind, den genannten mindestens einen Motor (60) wahlweise mit dem genannten mindestens einen Hinterrad (30) oder mit der genannten mindestens einen Luftschraube (80) zu verbinden.

2. Multifunktionaler Roller (1), **dadurch gekennzeichnet, dass** die genannte Luftschraube (80) in einer Zwischenposition zwischen dem genannten mindestens einen Motor (60) und dem genannten mindestens einen Hinterrad (30) montiert ist.

3. Multifunktionaler Roller (1) nach Anspruch 1 oder 2, **dadurch gekennzeichnet, dass** der genannte Lenker (50) an dem genannten Rahmen (10) angelenkt ist, sodass er in mindestens einer ersten Konfiguration angeordnet werden kann, in welcher die Vertikalstange (51) des genannten Lenkers (50) im Wesentlichen orthogonal oder transversal zu den genannten Achsen (21, 31) der Räder (20, 30) und/oder zu der genannten Plattform (40) verläuft, und in mindestens einer zweiten Konfiguration, in welcher die genannte Stange (51) im Wesentlichen parallel oder zumindest nahe zu der genannten Plattform (40) angeordnet ist, und dass die genannten Kupplungsmittel derart ausgebildet sind, dass, wenn der genannte Lenker (50) sich in der genannten ersten Konfiguration befindet, der genannte Motor (60) mechanisch mit dem genannten mindestens einen Hinterrad (30) verbunden ist, während, wenn sich der genannte Lenker (50) in der genannten zweiten Konfiguration befindet, der genannte Motor (60) mechanisch mit der genannten mindestens einen Luftschraube (80) verbunden ist.

4. Multifunktionaler Roller (1) nach Anspruch 1 oder 2, **dadurch gekennzeichnet, dass** die genannten Kupplungsmittel eine Kupplungseinheit (90) umfassen, die mit der Antriebswelle (623) des genannten mindestens einen Motors (60) verbunden ist, und wobei:
- wenn sich der genannte Lenker (50) in der genannten ersten Konfiguration befindet, die genannte Kupplungseinheit (90) mit der Achse (32) des genannten mindestens einen Hinterrads (30) verbunden ist;
- wenn sich der genannte Lenker (50) in der genannten zweiten Konfiguration befindet, die genannte Kupplungseinheit (90) mit der genannten mindestens einen Luftschraube (80) verbunden ist.

5. Multifunktionaler Roller (1) nach einem der vorhergehenden Ansprüche, **dadurch gekennzeichnet, dass** er zwei des genannten mindestens einen Hinterrads (30) umfasst, die auf derselben Achse (32) rotieren.

6. Multifunktionaler Roller (1) nach einem der vorhergehenden Ansprüche, **dadurch gekennzeichnet, dass** der genannte Motor (60) bürstenlos ist.

7. Multifunktionaler Roller (1) nach einem der vorhergehenden Ansprüche, **dadurch gekennzeichnet, dass** der genannte Motor (60) in einem Gehäuse (41) untergebracht ist, das so ausgestaltet ist, dass es Wasserdichtigkeit gewährleistet.

8. Multifunktionaler Roller (1) nach einem der vorhergehenden Ansprüche, **dadurch gekennzeichnet, dass** der genannte Motor (60) wahlweise mit der Achse (32) des genannten mindestens einen Hinterrads (30) über die genannten Übertragungsmittel (61, 62, 90, 34, 31) verbunden ist, die mindestens eine Magnetkupplung (62) umfassen, welche wiederum eine innere magnetische Halbkupplung (621) umfasst, die innerhalb des genannten Gehäuses (41) angeordnet ist, und eine äußere magnetische Halbkupplung (622), die außerhalb des genannten Gehäuses (41) angeordnet ist, wobei eine Welle (623) fest mit der genannten äußeren magnetischen Halbkupplung (622) verbunden ist, die genannte Welle (623) axial in die genannte Luftschraube (80) eingeführt ist, so dass sie diese durchdringt, und mechanisch mit der genannten Kupplungseinheit (90) verbunden ist, welche zwischen der genannten Luftschraube (80) und der Achse (32) des genannten mindestens einen Hinterrads (30) angeordnet ist.

9. Multifunktionaler Roller (1) nach einem der vorhergehenden Ansprüche, **dadurch gekennzeichnet, dass** die genannte Kupplungseinheit (90) ihrerseits ein erstes Element (91) und ein zweites Element (92) umfasst, die mit der genannten Welle (623) der Magnetkupplung (62) in Eingriff stehen und somit gemeinsam mit der Welle (623) rotieren, sowie ein drittes, nicht rotierendes Element (93), das mit dem genannten Lenker (50) derart verbunden ist, dass die Bewegung des genannten Lenkers (50) zwischen der genannten ersten und der genannten zweiten Konfiguration eine lineare Verschiebung der genannten Kupplungseinheit (90) in einer Richtung bewirkt, die koaxial zu der genannten Welle (623) der Magnetkupplung (62) verläuft, zwischen einer ersten Position und einer zweiten Position, wobei:
- in der genannten ersten Position das zweite Element (92) der Kupplungseinheit (90) mechanisch, direkt oder indirekt, mit der Achse (32) des genannten mindestens einen Hinterrads (30) verbunden ist;
- in der genannten zweiten Position das erste Element (91) der Kupplungseinheit (90) mechanisch, direkt oder indirekt, mit der genannten Luftschraube (80) verbunden ist.

## Revendications

1. Trottinette multifonction (1) comprenant :
un châssis (10) ;
au moins une roue avant (20) et au moins une roue arrière (30) tournant sur des axes (21, 32) parallèles l'un à l'autre et montés sur ledit châssis (10) ;
un plateau (40) apte à supporter un utilisateur en position debout, ledit plateau (40) étant monté sur ledit châssis (10) entre ladite au moins une roue avant (20) et ladite au moins une roue arrière (30) ;
un guidon (50) relié à ladite au moins une roue avant (20);
au moins un moteur électrique (60) avec des moyens d'alimentation correspondants montés sur ledit châssis (10) ;
au moins une hélice (80) montée sur ledit châssis (10) ;
des moyens de transmission entre ledit au moins un moteur (60) et ladite au moins une hélice (80) ;
**caractérisée en ce qu'**elle comprend également :
- des moyens de transmission entre ledit au moins un moteur (60) et ladite au moins une roue arrière (30) ;
- des moyens d'accouplement aptes à coupler sélectivement ledit au moins un moteur (60) avec ladite au moins une roue arrière (30) ou avec ladite au moins une hélice (80).

2. Trottinette multifonction (1), **caractérisée en ce que** ladite hélice (80) est montée dans une position intermédiaire entre ledit au moins un moteur (60) et ladite au moins une roue arrière (30).

3. Trottinette multifonction (1) selon la revendication 1 ou 2, **caractérisée en ce que** ledit guidon (50) est articulé audit châssis (10) de manière à pouvoir être disposé dans au moins une première configuration, dans laquelle la barre verticale (51) dudit guidon (50) est sensiblement orthogonale ou transversale auxdits axes (21, 31) des roues (20, 30) et/ou audit plateau (40), et dans au moins une seconde configuration, dans laquelle ladite barre (51) est sensiblement parallèle ou, en tout état de cause, proche dudit plateau (40), et **en ce que** lesdits moyens d'accouplement sont configurés de telle sorte que, lorsque ledit guidon (50) est dans ladite première configuration, ledit moteur (60) est mécaniquement relié à ladite au moins une roue arrière (30), tandis que, lorsque ledit guidon (50) est dans ladite seconde configuration, ledit moteur (60) est mécaniquement relié à ladite au moins une hélice (80).

4. Trottinette multifonction (1) selon la revendication 1 ou 2, **caractérisée en ce que** lesdits moyens d'accouplement comprennent une unité d'accouplement (90) reliée à l'arbre d'entraînement (623) dudit au moins un moteur (60), et dans laquelle :
- lorsque ledit guidon (50) est dans ladite première configuration, ladite unité d'accouplement (90) est reliée à l'axe (32) de ladite au moins une roue arrière (30) ;
- lorsque ledit guidon (50) est dans ladite seconde configuration, ladite unité d'accouplement (90) est reliée à ladite au moins une hélice (80).

5. Trottinette multifonction (1) selon l'une quelconque des revendications précédentes, **caractérisée en ce qu'**elle comprend deux de ladite au moins une roue arrière (30) tournant sur le même axe (32).

6. Trottinette multifonction (1) selon l'une quelconque des revendications précédentes, **caractérisée en ce que** ledit moteur (60) est de type sans balais.

7. Trottinette multifonction (1) selon l'une quelconque des revendications précédentes, **caractérisée en ce que** ledit moteur (60) est logé à l'intérieur d'un corps de confinement (41) configuré de manière à garantir l'étanchéité à l'eau.

8. Trottinette multifonction (1) selon l'une quelconque des revendications précédentes, **caractérisée en ce que** ledit moteur (60) est connecté sélectivement à l'axe (32) de ladite au moins une roue arrière (30) par l'intermédiaire desdits moyens de transmission (61, 62, 90, 34, 31) qui comprennent au moins un accouplement magnétique (62) comprenant à son tour un demi-accouplement magnétique interne (621) logé à l'intérieur dudit corps de confinement (41) et un demi-accouplement magnétique externe (622) logé à l'extérieur dudit corps de confinement (41), et dans laquelle un arbre (623) est solidaire dudit demi-accouplement magnétique externe (622), ledit arbre (623) étant inséré axialement dans ladite hélice (80) de sorte qu'il la traverse et étant mécaniquement relié à ladite unité d'accouplement (90) qui est positionnée entre ladite hélice (80) et l'axe (32) de ladite au moins une roue arrière (30).

9. Trottinette multifonction (1) selon les revendications précédentes, **caractérisée en ce que** ladite unité d'accouplement (90) comprend à son tour un premier élément (91) et un second élément (92) s'engageant avec ledit arbre (623) de l'accouplement magnétique (62) et tournant ainsi solidairement avec ledit arbre (623) lui-même, et un troisième élément non rotatif (93) relié audit guidon (50) de telle manière que le déplacement dudit guidon (50) entre ladite première et ladite seconde configuration entraîne le déplacement linéaire de ladite unité d'accouplement (90) dans une direction coaxiale audit arbre (623) de l'accouplement magnétique (62), entre ladite première position et ladite seconde position, et dans laquelle : dans ladite première position, ledit second élément (92) de l'unité d'accouplement (90) est mécaniquement relié, directement ou indirectement, audit axe (32) de ladite au moins une roue arrière (30) ; dans ladite seconde position, ledit premier élément (91) de l'unité d'accouplement (90) est mécaniquement relié, directement ou indirectement, à ladite hélice (80).
